# EUROPÄISCHE PATENTSCHRIFT

(11) **EP 0 986 155 B1**
(45) Veröffentlichungstag und Bekanntmachung des Hinweises auf die Patenterteilung: **24.04.2002**
(21) Anmeldenummer: 99117669.4
(22) Anmeldetag: 07.09.1999
(51) Int. Cl.: H02G 3/08

(54) **Elektrisches Haustechnikgerät mit Kabeleinführungstülle**
Domestic electrical apparatus with cable entry nozzle
Appareil domestique électrique avec entrée de câble pointu

(30) Priorität: 11.09.1998 DE 19841693
(43) Veröffentlichungstag der Anmeldung: 15.03.2000
(73) Patentinhaber: BSH Bosch und Siemens Hausgeräte GmbH, 81669 München (DE)
(72) Erfinder: Helminger, Markus, Dipl.-Ing., 83313 Siegsdorf (DE)

(56) Entgegenhaltungen:
- EP-A- 0 589 804
- WO-A-85/01396

## Beschreibung

Die Erfindung betrifft ein elektrisches Haustechnikgerät, insbesondere einen elektrischen Durchlauferhitzer, mit einem Gehäuse und einer durch die Wandung des Gehäuses führenden Kabeleinführungstülle.

Kabeleinführungstüllen sind für die elektrische Anschlußverbindung von Haushaltsgeräten bekannt. In der Regel sind es Einzelteile aus Kunststoff, die manuell in das Haustechnikgerät eingesteckt werden müssen. Nachteilig an den Kabeleinführungstüllen aus dem Stand der Technik ist, daß sie leicht verlierbar sind und daß sie bei der Montage vergessen werden können. Auch können bei diesen eingesteckten Kabeleinführungstüllen Dichtigkeitsprobleme auftreten. Sowohl die Fertigung als auch die Installation dieser Kabeleinführungstüllen aus dem Stand der Technik ist zeitaufwendig. Diese Kabeleinführungstüllen werden in der Regel auf zwei verschiedene Weisen mit dem Gehäuse verbunden. Bei der ersten Befestigungsweise werden sie in dem Gehäuse eingeklebt. Nachteilig dabei ist der hohe Klebeaufwand, der sich in den Fertigungskosten niederschlägt und die geringe Festigkeit. Des weiteren sind die Klebestellen in Bezug auf Dichtigkeit nicht perfekt zuverlässig. Bei der zweiten Art der Befestigung werden die Kabeleinführungstüllen lediglich im Gehäuse eingeschnappt. Dies bringt Probleme mit der Dichtigkeit mit sich. Darüber hinaus sind die Kabeleinführungstüllen verlierbar. Eine Vormontage der Kabeleinführungstüllen ist zweiaufwendig und damit kostentreibend.

Die EP-A-0 589 804 beschreibt ein derartiges elektrisches Haustechnikgerät.

Der Erfindung liegt die Aufgabe zugrunde, eine Kabeleinführungstülle zu schaffen, die unverlierbar ist, fest mit dem Gehäuse verbunden ist und dieses dicht verschließt. Darüber hinaus soll die Kabeleinführungstülle kostengünstig hergestellt und mit dem Gehäuse verbunden sein.

Die Aufgabe der Erfindung wird mit einem elektrischen Haustechnikgerät mit den Merkmalen des Patentanspruches 1 gelöst. Dazu wird das Gehäuse oder zumindest ein Gehäuseteil in zwei Komponentenspritzverfahren gefertigt. Das Gehäuse bzw. das Gehäuseteil des elektrischen Haustechnikgerätes besteht dabei aus der ersten Materialkomponente, die zweite Materialkomponente bildet die Kabeleinführungstülle.

Vorzugsweise ist das die Kabeleinführungstülle beinhaltende Gehäuseteil die Gehäuserückwand. Dies hat zum Vorteil, daß das elektrische Anschlußkabel des Haustechnikgerätes, das in der Regel aus der Wand austritt, in das Haustechnikgerät eingeführt werden kann, ohne daß es sichtbar zutagetritt. Des weiteren sind dabei die Kabelwege kurz gehalten.

In einer vorteilhaften Ausgestaltung der Erfindung besteht die Kabeleinführungstülle aus einem weichen flexiblen Material. Dadurch schmiegt sich die Kabeleinführungstülle leicht und problemlos an das in der Regel starre, dicke Anschlußkabel, das für elektrische Haustechnikgeräte mit hoher Anschlußleistung nötig ist. Das die Kabeleinführungstülle bildende weiche, flexible Material der zweiten Komponente im Spritzverfahren gewährleistet dabei auch eine gute Strahlwasserdichtigkeit des Haustechnikgerätes zwischen Anschlußkabel und Kabeleinführungstülle.

Vorzugsweise besteht das Gehäuse bzw. das Gehäuseteil aus einem steifen Material, um dem Haustechnikgerät die notwendige Stabilität zu geben.

In einer vorteilhaften Ausgestaltung der Erfindung weist die Kabeleinführungstülle eine große Grundfläche auf. Dies hat zum Vorteil, daß der Durchtrittspunkt des elektrischen Anschlußkabels des Haustechnikgerätes innerhalb eines größeren Bereichs variierbar ist. Aufgrund des weichen und flexiblen Materials der Kabeleinführungstülle kann das Kabel nahezu an einen beliebigen Ort innerhalb der Grundfläche der Kabeleinführungstülle durch das Gehäuse hindurchtreten. Dies ist eine entscheidene Erleichterung gegenüber konventionellen Tüllen, die in der Regel in ihrem Durchmesser kaum größer sind als das Anschlußkabel des elektrischen Haustechnikgerätes selbst, da diese elektrischen Anschlußkabel aufgrund ihrer Dicke sehr unflexibel sind und nur sehr schwer in die richtige Position gebogen werden können. Selbst wenn es gelingt, das Anschlußkabel richtig hinzubiegen, so daß es am Ort der Kabeleinführungstülle, wie sie in der Regel im Stand der Technik verwendet wird, durch das Gehäuse durchgeführt werden kann, übt das Anschlußkabel auf das Gehäuse eine nicht unerhebliche Kraft aufgrund seiner Verbiegung aus, die das Gehäusematerial unnötig belastet. Vorteilhafterweise beinhaltet die Kabeleinführungstülle einen Faltenbalg. Dabei weist der Faltenbalg vorzugsweise einen Faltenwurf auf, der aus der Ebene des Gehäuseteils, in dem sich die Kabeleinführungstülle befindet, herausragt. Dies hat zum Vorteil, daß der Durchtrittspunkt des elektrischen Anschlußkabels durch die Kabeleinführungstülle deutlich außerhalb der Ebene des die Kabeleinführungstülle aufnehmenden Gehäuseteils liegen kann.

Vorzugsweise besitzt die Kabeleinführungstülle im Bereich der Durchtrittsöffnung des Kabels durch die Tülle eine konische Form. Dadurch kann sich die Kabeleinführungstülle für unterschiedliche dicke Kabel mühelos an den jeweiligen Kabeldurchmesser anpassen und das Anschlußkabel sauber abdichten.

In einer vorteilhaften Ausgestaltung der Erfindung ist die Kabeleinführungstülle im Neuzustand geschlossen und besitzt eine konische Spitze. Diese wird beim Einführen des elektrischen Anschlußkabels passend für den jeweiligen Kabeldurchmesser abgeschnitten, so daß die Kabeleinführungstülle für beliebige Kabeldurchmesser eine ideale Dichtigkeit gewährleistet. Vorteilhafterweise wird die weiche Materialkomponente beim Spritzen mit einem Gleitmittel versehen. Dadurch kann das Kabel leichtgängiger durch die aus der weichen Materialkomponente bestehende Kabeleinführungstülle eingeführt werden.

Vorzugsweise ist die Grundfläche der Kabeleinführungstülle rechteckig. Dies bietet fertigungstechnische Vorteile beim Zweikomponentenspritzen.

Die erfindungsgemäße Kabeleinführungstülle findet vorzugsweise bei einem elektrischen Durchlauferhitzer Anwendung.

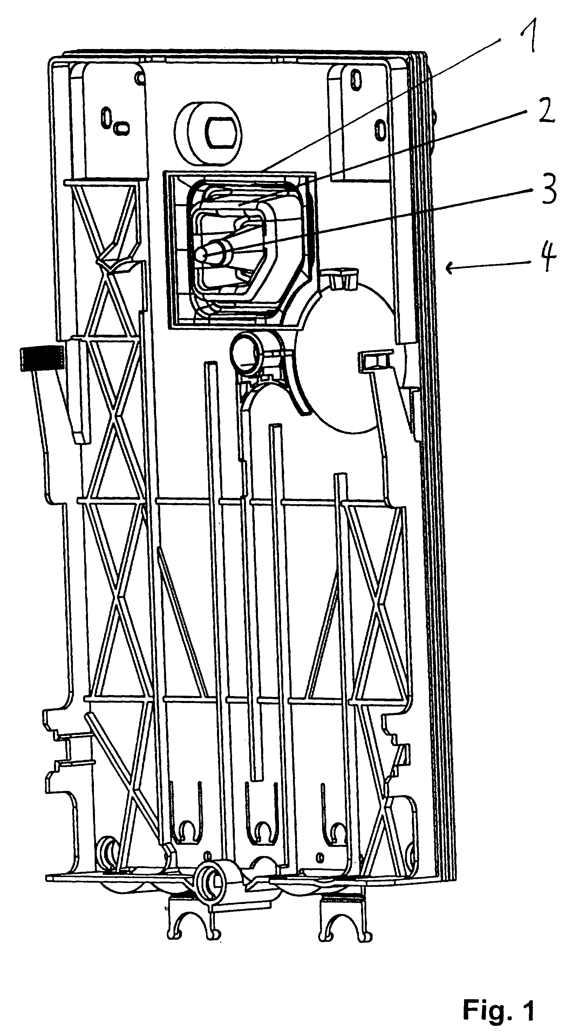

Eine Ausgestaltung der Erfindung ist in der Zeichnung dargestellt. Die Figur zeigt eine Kabeleinführungstülle die als zweite Komponente in einem Zweikomponentenspritzverfahren in einer Rückwand eines Durchlauferhitzers angespritzt ist.

Eine Kabeleinführungstülle 1 mit einer großen rechteckigen Grundfläche ist in einem Zweikomponentenspritzverfahren als zweite Komponente aus weichem flexiblem Material in der Gehäuserückwand 4 eines elektrischen Durchlauferhitzers angespritzt. Die erste Komponente des Zweikomponentenspritzverfahrens, aus der die Gehäuserückwand 4 und das übrige Gehäuse bestehen, ist ein vergleichsweise steifer Kunststoff. Die Kabeleinführungstülle 1 weist einen Faltebbalg 2 auf, dessen Faltenwurf aus der Ebene der Gehäuserückwand 4 herausragt. Die Kabeleinführungstülle 1 weist einen konische Spitze 3 auf. Im Neuzustand ist diese Spitze 3 geschlossen. Zum Einführen des Kabels wird die konische Spitze 3 an einer derart gewählten Stelle abgeschnitten, daß die Öffnung in ihrem Querschnitt geringfügig kleiner ist als der Querschnitt des elektrischen Anschlußkabels. Beim Einführen des elektrischen Anschlußkabels dichtet damit das weiche Material der Kabeleinführungstülle 1 an dieser abgeschnittenen konischen Spitze 3 wie eine Dichtlippe optimal gegen Strahlwasser ab. Die Durchtrittsöffnung des Kabels ist dabei aufgrund des Faltenwurfes in der Regel außerhalb der Ebene der Gehäuserückwand 4. Aufgrund des weichen flexiblen Materials der Kabeleinführungstülle 1 kann die Durchtrittsstelle des Kabels durch die Gehäuserückwand 4 so verschoben werden, daß sie innerhalb der rechteckigen Grundfläche an einen nahezu beliebigen Ort liegt. Dadurch können starke Biegekräfte innerhalb des dikken elektrischen Anschlußkabels vermieden werden. Diese Kräfte müßten ansonsten von dem Gehäuse des elektrischen Durchlauferhitzers aufgenommen werden, so daß das Gehäuse auf kurz oder lang Schaden nehmen könnte. Durch den Faltenwurf des Faltenbalgs 2 und durch das konische Zulaufen auf die abgeschnittene Spitze 3 zur Kabeldurchtrittsöffnung hin ist gewährleistet, daß der Konos der Kabeleinführungstülle 1 für jede beliebige Lage des elektrischen Anschlußkabels bezüglich der rechteckigen Grundfläche die Kabeleinführungstülle 1 das Kabel sicher gegen Strahlwasser wie eine Dichtlippe abdichtet. Auf ihrer Seite zur Gehäuserückwand 4 hin ist die Kabeleinführungstülle 1 aufgrund der Zweikomponentenspritztechnik ohnehin dicht mit der Gehäuserückwand als einstückiges Teil verbunden. Dadurch entfallen die im Stand der Technik üblichen Abdichtungs- bzw. Verklebungsmaßnahmen zwischen Kabeleinführungstülle 1 und Gehäuserückwand 4. Die Kabeleinführungstülle 1 wird beim Spritzen mit einem Gleitmittel versehen, so daß das elektrische Anschlußkabel leicht in die Tülle eingeführt werden kann.

## Patentansprüche

1. Elektrisches Haustechnikgerät mit einem Gehäuse und einer durch die Wandung des Gehäuses führenden Kabeleinführungstülle (1), **dadurch gekennzeichnet, daß** ein Gehäuseteil und die Kabeleinführungstülle (1) zusammen als einstückiges Materialbauteil, bestehend aus zwei in einem Zweikomponenten-Spritzgußverfahren erstellten Materialkomponenten, ausgebildet ist, wobei das Gehäuseteil mit einer ursprünglich freien Aussparung für die Kabeleinführungstülle (1) aus der einen Materialkomponente spritztechnisch hergestellt ist und die Kabeleinführungstülle (1) aus der zweiten Materialkomponente in die freie Aussparung des Gehäuseteils im Zweikomponentenverfahren an die erste Materialkomponente in inniger Materialverbindung angespritzt ist.

2. Elektrisches Haustechnikgerät nach Anspruch 1, **dadurch gekennzeichnet, daß** das Gehäuseteil, an dem die Kabeleinführungstülle (1) angespritzt ist, die Gehäuserückwand (4) ist.

3. Elektrisches Haustechnikgerät nach Anspruch 1, **dadurch gekennzeichnet, daß** die Kabeleinführungstülle (1) aus einem weichen flexiblen Material besteht.

4. Elektrisches Haustechnikgerät nach Anspruch 1, **dadurch gekennzeichnet, daß** das Gehäuseteil, an dem die Kabeleinführungstülle (1) angespritzt ist, aus einem steifen Material besteht.

5. Elektrisches Haustechnikgerät nach Anspruch 1, **dadurch gekennzeichnet, daß** die Kabeleinführungstülle (1) eine große Grundfläche aufweist.

6. Elektrisches Haustechnikgerät nach Anspruch 1, **dadurch gekennzeichnet, daß** die Kabeleinführungstülle (1) einen Faltenbalg (2) aufweist.

7. Elektrisches Haustechnikgerät nach Anspruch 1, **dadurch gekennzeichnet, daß** die Kabeleinführungstülle (1) im Bereich der Kabeldurchführung einen konische Form besitzt.

8. Elektrisches Haustechnikgerät nach Anspruch 1, **dadurch gekennzeichnet, daß** die Kabeleinführungstülle (1) im Neuzustand geschlossen ist und eine konische Spitze (3) besitzt, die zur Anpassung an den jeweiligen Kabeldurchmesser abschneidbar ist.

9. Elektrisches Haustechnikgerät nach Anspruch 1, **dadurch gekennzeichnet, daß** die Kabeleinführungstülle (1) beim Spritzen mit einem Gleitmittel versehen wird.

10. Elektrisches Haustechnikgerät nach Anspruch 6, **dadurch gekennzeichnet, daß** der Faltenbalg (2) einen Faltenwurf aufweist, der aus der Ebene des Gehäuseteils herausragt.

11. Elektrisches Haustechnikgerät nach Anspruch 1, **dadurch gekennzeichnet, daß** die Grundfläche der Kabeleinführungstülle (1) rechteckig ist.

12. Elektrischer Durchlauferhitzer als elektrisches Haushaltsgerät mit einer Kabeleinführungstülle (1) nach einem der vorstehenden Ansprüche.

## Claims

1. Domestic electrical appliance comprising a housing and a cable entry nozzle (1) leading through the wall of the housing, **characterised in that** a housing part and the cable entry nozzle (1) are together constructed as an integral material component consisting of two material components produced in a two-component injection moulding process, wherein the housing part is produced by injection moulding from one material component with an originally free cut-out for the cable entry nozzle (1) and the cable entry nozzle (1) is injection moulded to the first material component in intimate material connection from the second material component in the free cut-out of the housing part in the two-component process.

2. Domestic electrical appliance according to claim 1, **characterised in that** the housing part to which the cable entry nozzle (1) is injection moulded is the housing rear wall (4).

3. Domestic electrical appliance according to claim 1, **characterised in that** the cable entry nozzle (1) consists of a soft flexible material.

4. Domestic electrical appliance according to claim 1, **characterised in that** the housing part to which the cable entry nozzle (1) is injected moulded consists of a stiff material.

5. Domestic electrical appliance according to claim 1, **characterised in that** the cable entry nozzle (1) has a large base area.

6. Domestic electrical appliance according to claim 1, **characterised in that** the cable entry nozzle (1) comprising a bellows (2).

7. Domestic electrical appliance according to claim 1, **characterised in that** the cable entry nozzle (1) has a conical form in the region of the cable passage.

8. Domestic electrical appliance according to claim 1, **characterised in that** the cable entry nozzle (1) is closed in the new state and has a conical tip (3), which can be cut off for adaptation to the respective cable diameter.

9. Domestic electrical appliance according to claim 1, **characterised in that** the cable entry nozzle (1) is provided with a sliding means during the injection moulding.

10. Domestic electrical appliance according to claim 6, **characterised in that** the bellows (2) has a fold projection which extends out of the plane of the housing part.

11. Domestic electrical appliance according to claim 1, **characterised in that** the base area of the cable entry nozzle (1) is rectangular.

12. Domestic electrical heater as a domestic electrical appliance with a cable entry, nozzle (1) according to any one of the preceding claims.

## Revendications

1. Appareil domestique électrique comprenant une enceinte et un manchon d'entrée de câble (1) menant à travers la paroi de l'enceinte, **caractérisé en ce qu'**une partie d'enceinte et le manchon d'entrée de câble (1) sont conçus ensemble comme composant matériel monobloc, constitué de deux composants matériels réalisés par moulage par injection de deux composants, la partie d'enceinte étant fabriquée par moulage par injection avec un évidement libre pour le manchon d'entrée de câble (1) à partir de l'un des composants matériels et le manchon d'entrée de câble (1) étant injectée par injection de deux composants sur le premier composant matériel en une liaison matérielle intime à partir du second composant matériel dans l'évidement libre de la partie d'enceinte dans le procédé de moulage.

2. Appareil domestique électrique selon la revendication 1, **caractérisé en ce que** la partie d'enceinte sur laquelle le manchon d'entrée de câble (1) est moulé par injection est le panneau arrière de l'enceinte (4).

3. Appareil domestique électrique selon la revendication 1, **caractérisé en ce que** le manchon d'entrée de câble (1) est constitué d'un matériau flexible mou.

4. Appareil domestique électrique selon la revendication 1, **caractérisé en ce que** la partie d'enceinte sur laquelle le manchon d'entrée de câble a été moulé par injection, est constituée d'un matériau rigide.

5. Appareil domestique électrique selon la revendication 1, **caractérisé en ce que** le manchon d'entrée de câble (1) présente une grande surface de base.

6. Appareil domestique électrique selon la revendication 1, **caractérisé en ce que** le manchon d'entrée de câble (1) présente un soufflet (2).

7. Appareil domestique électrique selon la revendication 1, **caractérisé en ce que** le manchon d'entrée de câble (1) possède une forme conique dans la zone de la traversée du câble.

8. Appareil domestique électrique selon la revendication 1, **caractérisé en ce que** le manchon d'entrée de câble (1) est fermé à l'état neuf et possède une pointe conique (3) pouvant être découpée pour son adaptation au diamètre respectif du câble.

9. Appareil domestique électrique selon la revendication 1, **caractérisé en ce que** le manchon d'entrée de câble (1) est pourvu d'un lubrifiant lors de l'injection.

10. Appareil domestique électrique selon la revendication 6, **caractérisé en ce que** le soufflet (2) présente un plissage faisant saillie du plan de la partie d'enceinte.

11. Appareil domestique électrique selon la revendication 1, **caractérisé en ce que** la base du manchon d'entrée de câble (1) est rectangulaire.

12. Chauffe-eau électrique comme appareil domestique électrique muni d'un manchon d'entrée de câble (1) selon l'une des revendications précédentes.
